# EUROPEAN PATENT APPLICATION

(11) **EP 4 760 964 A1**
(43) Date of publication of application: **17.06.2026**
(21) Application number: 24865614.2
(22) Date of filing: 07.06.2024
(51) Int. Cl.: H01M 50/507, H01M 50/533, H01M 50/516, H01M 50/521, H01M 10/658

(54) **BATTERY MODULE AND METHOD FOR MANUFACTURING BATTERY MODULE**

(30) Priority: 12.09.2023 KR 20230121033
(71) Applicant: SK On Co., Ltd., Seoul 03161 (KR)
(72) Inventor: KIM, Jae Hun, Daejeon 34124 (KR); OH, Yoon Sung, Daejeon 34124 (KR); LEE, Seung Won, Daejeon 34124 (KR)
(74) Representative: Prüfer & Partner mbB Patentanwälte · Rechtsanwälte
(86) International application number: PCT/KR2024/007789
(87) International publication number: WO 2025/058169

(57) **Abstract**

The battery module of the present disclosure includes a main body portion that supplies or stores electrical energy and tab portions that protrude from one side of the main body portion, and comprises: a plurality of battery cells stacked in a preset first direction; 8 a module case accommodating the plurality of battery cells; a plurality of first bus bars, which are coupled to any one of first surfaces of the tab portions formed in a second direction in which the tab portions protrude within the module case and in a third direction perpendicular to the first direction and the second direction, and are provided in a number as many as that of the tab portions; and a second bus bar which extends in the first direction inside the module case and is coupled to at least some of the plurality of first bus bars to electrically connect the plurality of battery cells to the outside.

## Description

### BACKGROUND OF THE INVENTION

### [Field]

The present disclosure relates to a battery module and a method for manufacturing a battery module. More particularly, to a battery module with improved stability and assembly, and a method for manufacturing a battery module.

### [Background technology]

A secondary battery is a battery configured to convert electrical energy into chemical energy and store the energy to be reused multiple times through charging and discharging. Secondary batteries have been widely used in various industries owing to their economic feasibility and eco-friendliness. In particular, of secondary batteries, lithium secondary batteries are widely utilized across industries, including mobile devices that require high-density energy.

For high capacity and high-power performance, a battery assembly (e.g., battery module or battery pack) may be manufactured and used by grouping a plurality of secondary batteries together. To increase the energy density of the battery assembly, it is necessary to minimize the wasted space inside.

When assembling multiple batteries and busbars, there may be a lot of wasted spaces. Research is actively being conducted to minimize the wasted space in an attempt to increase the energy density of the battery assembly and improve stability.

### [Detailed Description of the Invention]

### [Technical Problem]

The present disclosure aims to improve energy density by eliminating wasted space inside a battery assembly.

In addition, the present disclosure aims to improve the electrical connection between a busbar assembly and a battery cell.

Further, the present disclosure aims to provide a battery module with reduced manufacturing costs and improved manufacturing efficiency, and a method for manufacturing a battery module.

Moreover, the present disclosure may be widely applied in the fields of electric vehicles, battery charging stations, and other green technologies such as solar power generation and wind power generation utilizing batteries.

Furthermore, the present disclosure may be used in eco-friendly electric vehicles, hybrid vehicles, and the like to prevent climate change by suppressing air pollution and greenhouse gas emissions.

### [Technical solutions]

A battery module of the present disclosure includes: a plurality of battery cells including a main body supplying or storing electrical energy and a tab protruding from one side of the main body, and staked along a predetermined first direction; a module case accommodating the plurality of battery cells; a plurality of first busbars coupled to any one of surfaces of the tab formed along a second direction along which the tab protrudes inside the module case and along a third direction perpendicular to the first direction and the second direction, and provided in the same number as that of the tab; and a second busbar extending along the first direction inside the module case and coupled with at least a portion of the plurality of first busbars to electrically connect the plurality of battery cells with the outside.

A free end of the tab may be positioned to face the main body.

The tab may include a first region coupled with the first busbar and a second region connecting the first region and the main body, wherein at least a portion of the first region and at least a portion of the second region may be provided in parallel with each other.

The tab may be formed by bending.

The first region may be integrally connected with the second region.

The first busbar includes: a first plate coupled with the tab; and a second plate coupled with the second busbar and provided perpendicularly on an edge of the first plate, wherein the first plate is provided in parallel with the tab to be joined together.

The second busbar includes: a connection plate in contact with one surface of the second plate; and a slit open to one side, wherein the first plate may be inserted into the slit, and one surface of the second plate and one surface of the connection plate may come in contact.

The first busbar may be connected to the second busbar by brazing welding.

The first busbar and the second busbar may include the same material.

The module case may further include an insulator including an insulating material inside.

The present disclosure relates to a method for manufacturing a battery module which includes: a plurality of battery cells including a main body supplying or storing electrical energy and a tab protruding from one side of the main body and stacked along a predetermined first direction; and a busbar assembly electrically connecting the plurality of battery cells, the method including: a first coupling step for coupling a first busbar of the busbar assembly to any one of surfaces of the tab formed along a second direction along which the tab protrudes and a third direction perpendicular to the first direction and the second direction; and a second coupling step for connecting the first busbar with a second busbar of the busbar assembly extending along the second direction.

The method may further include a tab bending step for bending the tab such that a free end of the tab faces the main body.

In the tab bending step, the tab may be bent twice.

In the first coupling step, a first plate of the first busbar is arranged in parallel with the tab, and the first busbar and the first plate may be joined by cold joining.

In the first coupling step, the first busbar may be joined with the first plate by a clinching joining.

The second coupling step may include: an insertion step for inserting a second plate of the first busbar into a slit open at one side of the second busbar; and a contacting step for bringing one surface of the second plate of the first busbar in contact with one surface of the connection plate of the second busbar.

In the insertion step, the second busbar moves along the third direction such that the first plate is inserted into the slit.

In the second coupling step, the first busbar may be coupled to the second busbar by brazing welding.

In the second coupling step, a filler metal is supplied to a region where the second plate and the second busbar face each other along the third direction to weld the second plate and the second busbar.

The method may further include an insulator insertion step for inserting an insulator including an insulating material inside the module case.

### [Effect]

According to an embodiment of the present disclosure, energy density may be improved by eliminating wasted space inside a battery assembly.

Furthermore, the present disclosure may improve the electrical connection between a busbar assembly and a battery cell.

The present disclosure may also provide battery cells with reduced manufacturing costs and improved manufacturing efficiency, and a method for manufacturing a battery module.

### [Description of the drawing]

FIG. 1 illustrates a battery cell according to an embodiment of the present disclosure.
FIG. 2 is an exploded view of a battery module according to an embodiment of the present disclosure.
FIGS. 3 to 7 illustrate a joined structure of a battery cell and a first busbar, according to an embodiment of the present disclosure.
FIGS. 8 to 12 illustrate a joined structure of a first busbar and a second busbar according to an embodiment of the present disclosure.
FIG. 13 illustrates an insulator according to an embodiment of the present disclosure.
FIGS. 14 and 15 are schematic flowcharts of a method for manufacturing a battery module according to an embodiment of the present disclosure.

### [Embodiments]

Hereinafter, the present disclosure will be described in detail with reference to the accompanying drawings. However, this is merely illustrative, and the present disclosure is not limited to the specific embodiment described as an example.

Specific terms used herein are for convenience of description only and are not intended to limit the embodiments shown.

For example, the expressions "identical" and "identical to" as used herein refer not only to strictly identical conditions, but also to conditions with tolerances or differences in the degree to which the same function is derived.

For example, expressions such as "in any direction," "along any direction," "in parallel with," "perpendicular," "centered," "concentric," or "coaxial" that refer to a relative or absolute placement not only refer to such placement strictly, but also to a state of relative displacement by a tolerance, or by an angle or distance of deriving the same function.

For the purpose of describing the present disclosure, the following description will be set forth based on a spatial Cartesian coordinate system by the X, Y, and Z axes that are orthogonal to each other. Each axial direction (X-axis direction, Y-axis direction, Z-axis direction) refers to both directions in which each axis extends.

References to X direction, Y direction, and Z direction as used herein are for clear understanding of the present disclosure, although each direction may be defined differently depending on the reference.

The use of terms such as "first, second, third," and the like preceding the components referred below is intended to avoid confusion as to the components to which they refer, but not intended to indicate any order, importance, or dominant-subordinate relationship among the components. For example, it is also possible to implement an invention including only the second component without the first component.

As used herein, singular expressions include the plural unless the context clearly indicates otherwise.

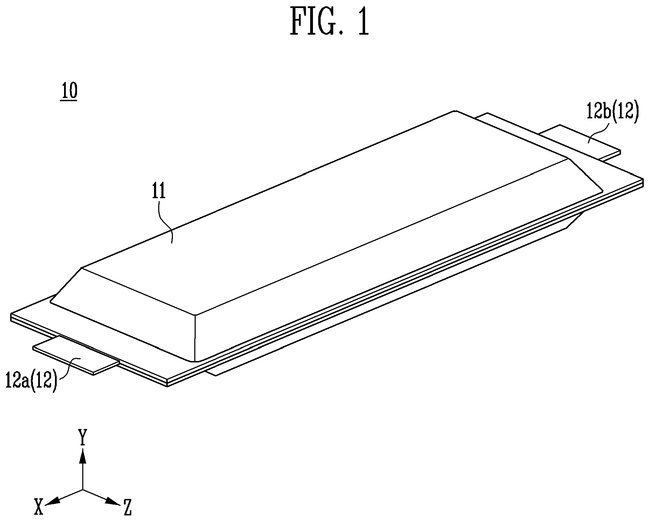

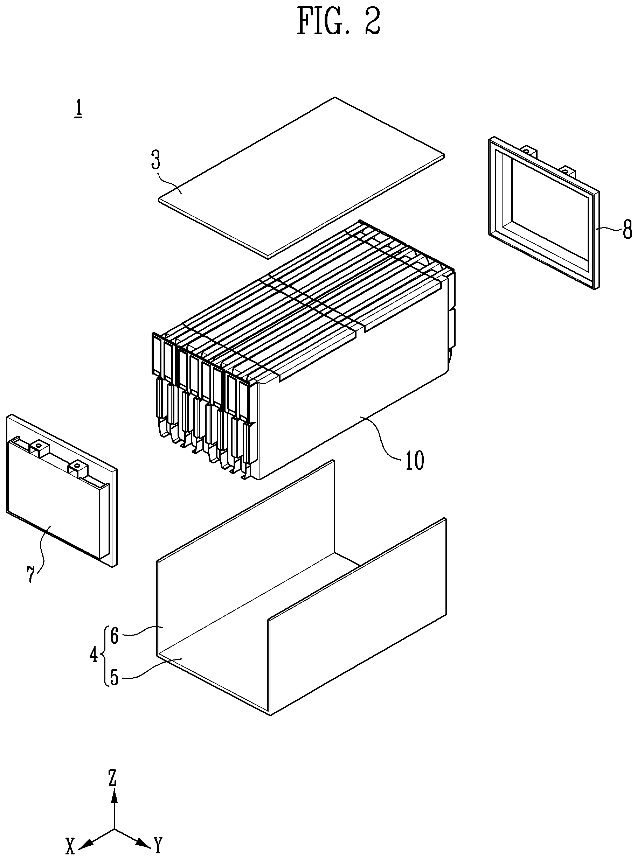

FIG. 1 illustrates a battery cell 10 according to an embodiment of the present disclosure, and FIG. 2 illustrates a schematic exploded view of a battery module 1 according to an embodiment of the present disclosure.

The battery cell 10 described herein refers to a secondary battery that may be used repeatedly by charging and discharging electrical energy. For example, it may refer to, but not limited to, a lithium secondary battery or a lithium-ion battery. In another example, it may refer to an all-solid-state battery.

The battery cell 10 may be categorized as a pouch type secondary battery, a prismatic secondary battery, or a cylindrical secondary battery depending on its shape. For the ease of explanation herein, a pouch-type secondary battery is illustrated as an example, but is not limited thereto.

On the other hand, the battery module 1 as described herein refers to a battery assembly in which the battery cells 10 are grouped in one or more numbers and placed in a case to protect them from external shock, heat, vibration, and the like and to secure high power and high capacity characteristics.

The battery cell 10 may include a main body 11 and a tab 12. The main body 11 may supply or store electrical energy. The main body 11 may include an electrode assembly. The electrode assembly may include a positive electrode, a negative electrode, and a separator. The electrode assembly may include a positive electrode, a negative electrode, and a separator. The electrode assembly may be categorized as stacking, winding, stack-folding, or Z-stacking types depending on a type that the positive electrode, negative electrode, and separator are stacked. The battery cell 10 of the present disclosure may include electrode assemblies stacked in a variety of ways without limitation to any one stacking method.

The positive electrode and negative electrode may include a collector. The positive electrode may include a positive electrode collector, and the negative electrode may include a negative electrode collector. The collector may include any conductive material known in the art to the extent without causing a chemical reaction within the lithium secondary battery. For example, the collector may include any one of stainless steel, nickel (Ni), aluminum (Al), titanium (Ti), copper (Cu), and alloys thereof, and may be provided in various forms, such as film, sheet, foil, and the like.

The positive electrode and negative electrode may include an active material. The positive electrode may include a positive electrode active material and the negative electrode may include a negative electrode active material. The positive electrode active material may be a material into which lithium ions can be inserted and removed, and the negative electrode active material may be a material into which lithium ions can be attracted and repelled. For example, the positive electrode active material may be a lithium metal oxide, and the negative electrode active material may be any one of crystalline carbon, amorphous carbon, carbon composites, carbon-based materials such as carbon fibers and the like, lithium alloys, silicon (Si), and tin (Sn).

The positive electrode and negative electrode may further include a binder and a conductive material, respectively, for improved mechanical stability and electrical conductivity.

The separator may be configured to prevent electrical short circuits between the positive electrode and negative electrode and allow the flow of ions to occur. The type of separator is not particularly limited, but may include a porous polymeric film. For example, the separator may include a porous polymeric film or a porous nonwoven fabric.

The tab 12 may protrude from one side of the main body 11. The tab 12 may protrude from any one side of the main body 11. The tab 12 may electrically connect the battery cell 10 to the outside. The tab 12 may be connected with the positive electrode and negative electrode, respectively. The tab 12 may include a positive electrode tab 12a in connection with the positive electrode and a negative electrode tab 12b in connection with the negative electrode.

In an embodiment, the positive electrode tab and the negative electrode tab may protrude in different directions. For example, referring to FIG. 1, the positive electrode tab may protrude from one side of the main body 11 along the X direction and the negative electrode tab may protrude from the other side of the body 11 along the X direction. In other embodiments, the positive electrode and negative electrode tabs may protrude in the same direction.

For ease of explanation, the second direction in which the tab 12 protrudes may be defined as the X-direction.

The battery module 1 may include a plurality of battery cells 10. The plurality of battery cells 10 may be stacked along a predetermined first direction. Referring to FIG. 2, the plurality of battery cells 10 may be stacked along a Y-direction. In the present disclosure, the first direction may be defined as the Y-direction for ease of explanation. Further, the third direction refers to a direction perpendicular to the first and second directions. Thus, the third direction may be defined as the Z-direction.

A plurality of battery cells 10 may be stacked in such a way that one surface of the main body 11 of any one battery cell 10 and one surface of the main body 11 of another battery cell 10 face each other. The direction in which the battery cells 10 are stacked may be formed perpendicular to the direction in which the tab 12 protrudes. This enables efficient utilization of the space of the battery module 1 and maximizes the energy density.

The battery module 1 includes a module case 2 accommodating a plurality of battery cells 10. The plurality of battery cells 10 may be housed inside the module case 2. The module case 2 may cover the plurality of battery cells 10 from the outside. For example, the module case 2 may be provided in a hexahedral shape.

The module case 2 may include a low cover 4 supporting the battery cells 10. The module case 2 may include an upper cover covering an internal accommodating space in combination with the low cover 4.

The low cover 4 may include a lower body 5 supporting a lower surface of the plurality of battery cells 10 and a side body 6 extending from edge regions of the lower body 5 to support the sides of the plurality of battery cells 10. For example, referring to FIG. 2, the battery cell 10 may be positioned on the lower body 5. The side body 6 may extend upwardly from both opposing edges of the lower body 5. The lower body 5 and the side body 6 may be connected to be provided in a channel shape, inside of which the battery cell 10 may be located. The upper cover 3 may be coupled to the low cover 4. The upper cover 3 may be coupled with the low cover 4 to form a hexahedral shape that is open on both sides.

The module case 2 may further include a front cover 7 and an end cover 8. The end cover 8 may be coupled to the low cover 4. The end cover 8 may be coupled to the upper cover 3. The front cover 7 may be coupled to the low cover 4. The front cover 7 may be coupled to the upper cover 3. Collectively, the end cover 8, front cover 7, low cover 4, and upper cover 3 may be combined to accommodate the battery cell 10 inside.

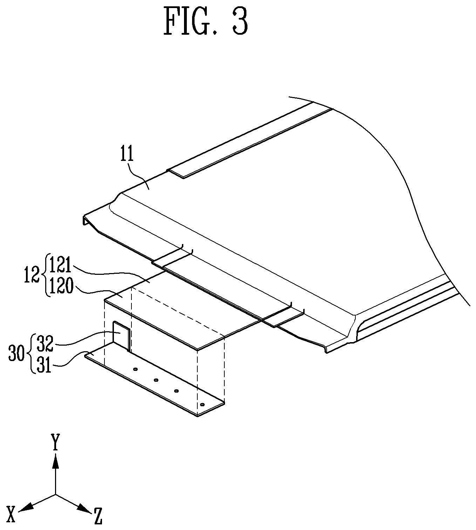

FIGS. 3 to 7 illustrate a joined structure of a battery cell 10 and a first busbar 30, according to an embodiment of the present disclosure.

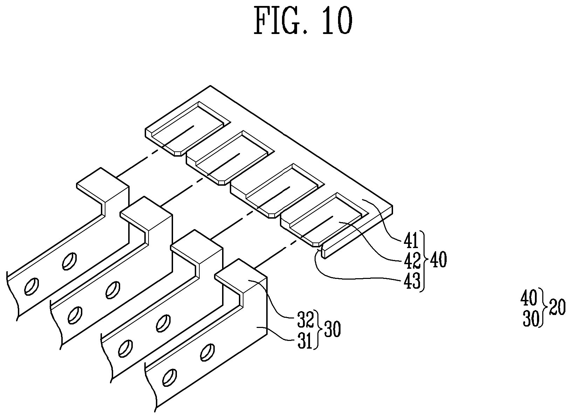

The battery module 1 of the present disclosure may further include a busbar assembly 20 (see FIG. 10) electrically connecting the plurality of battery cells 10. The busbar assembly 20 may include a first busbar 30 in contact with the tab 12 and a second busbar 40 externally connecting the first busbar 30.

The busbar assembly 20 may be located inside the module case 2. The busbar assembly 20 may prevent efficient use of the internal space of the module case 2. The present disclosure may provide a battery module 1 that may efficiently utilize the space of the module case 2 by changing the shape of the busbar assembly 20.

In addition, the tab 12 may protrude to one side of the busbar assembly in the process of connecting with the busbar assembly 20. A protruding length of the tab may vary. To improve the quality of the battery module 1, it is desirable to minimize the scatter of the protruding lengths of the tabs 12. However, due to difficulties in managing the protruding lengths, manufacturing efficiency may be reduced. The present disclosure may provide a battery module 1 and a method for manufacturing a battery module, in which the protruding length of the tabs 12 does not require management by connecting the first busbar 30 and the second busbar 40.

Furthermore, when the busbar assembly 20 and the tab 12 are formed of homogeneous materials, intermetallic compounds may be generated during welding. For example, intermetallic compounds may be generated when the tab 12 including aluminum and the busbar assembly 20 including copper are welded. The present disclosure may prevent issues caused by welding of homogeneous materials, as the first busbar 30 and the second busbar 40 are made of homogeneous materials.

Inside the module case 2, the first busbar 30 may be coupled to the tab 12. Specifically, the first busbar 30 may be coupled with any one of the surfaces of the tab 12. The one surface of the tab 12 may be perpendicular to the first direction, and the free end of the tab 12 may be positioned to face outwardly of the main body 11.

The one surface of the tab 12 may be formed along the second and third directions in which the tab 12 protrudes. The one surface of the tab 12 may be positioned to face the direction in which the plurality of battery cells 10 are stacked.

The tab 12 may include a first region 120 coupled with the first busbar 30 and a second region 121 connecting the first region 120 to the main body 11. The first region 120 may be located closer to a free end of the tab 12 than the second region 121. The second region 121 may be positioned closer to the main body 11 than the first region 120. In an embodiment, the first region 120 and the second region 121 may include imaginary regions.

After the tab 12 is coupled to the first busbar 30, the free end of the tab 12 may change from a position facing the outside of the main body 11 to a position facing toward the main body 11. This allows at least a portion of the first region 120 and at least a portion of the second region 121 to be provided in parallel with each other.

In brief, the first region 120 and the second region 121 of the tab 12 will form a 'U' shape lying on its side. As the first region 120 and the second region 121 overlap, the protruding length of the tab 12 is reduced, and the space within the module may be utilized efficiently.

Specifically, one surface of the first busbar 30 and one surface of the tab 12 may be connected by being positioned to face each other. Thereby, the contact surface area increases, which may improve electrical connectivity and increase stability.

Referring to FIGS. 3 to 5, the first busbar 30 may include a first plate 31 coupled with the tab 12 and a second plate 32 coupled to the second busbar 40. The second plate 32 may be perpendicular at one edge of the first plate 31. The first plate 31 and the second plate 32 may be perpendicular to each other. The second plate 32 may be formed smaller than the first plate 31.

The first plate 31 of the first busbar 30 may be connected in contact with the first region 120 of the tab 12. The first plates 31 may be arranged in parallel with the first region 120 and bonded to each other.

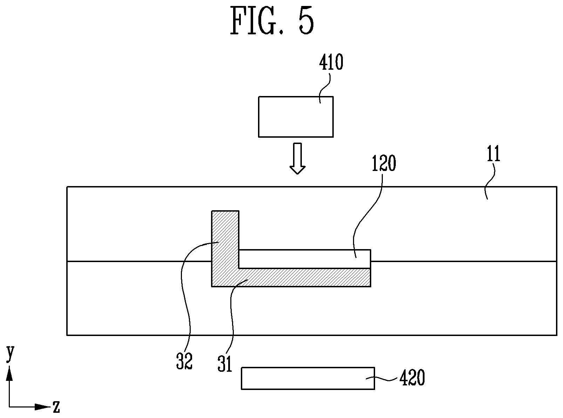

The length of the first busbar 30 along the third direction may be greater than or equal to the length of the electrode tabs. This is to allow the first busbar 30 to protrude outwardly of the electrode tab to be connected with the second busbar 40. Referring to FIG. 5, the length of the first busbar 30 along the third direction may be greater than the length of the tab 12.

The first busbar 30 may be cold joined to the tab 12. After the first busbar 30 and the tab 12 are positioned in parallel with each other, the first busbar 30 and the tab 12 may be connected by pressing on both sides. For example, the first busbar 30 and the tab 12 may be joined by clinching.

The first busbar 30 may be provided in the same number as that of the tab 12. Thereby, the plurality of tabs 12 may be joined to the plurality of first busbars 30, respectively.

A joining member 400 may join the first busbar 30 and the tab 12. The joining member 400 may include a pressurizer 410 and a support 420. The pressurizer 410 may pressurize one side of the first busbar 30 or the tab 12. The support 420 may be provided on the opposite side of the pressurizer 410, with the first busbar 30 or tab 12 interposed therebetween. The first busbar 30 and the tab 12 may be joined by clinching by the pressurizer 410 and the support 420.

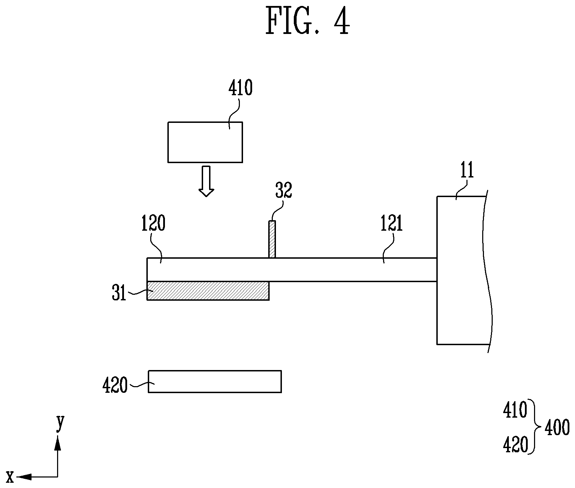

Referring to FIGS. 4 and 5, the pressurizer 410 may be positioned to face a first surface of the tab 12, and the support 420 may be positioned to face a second surface of the tab 12.

The joining member 400 may press the tab 12 at least once. Thereby, the stability of the connection between the first busbar 30 and the tab 12 may be improved.

The clinching joining may form a recess 310 formed by one side recessed in at least one of the tab 12 or the first busbar 30. For ease of explanation, the present disclosure will be described based on the assumption that the first busbar 30 is located at the bottom and the tab 12 is located at the top along the first direction.

The first busbar 30 includes copper and thus may be formed to be stiffer and thicker than the tab 12. Thereby, it may be advantageous for the first busbar 30 to be moved to the bottom. However, when the first busbar 30 and the tab 12 may be connected by cold joining, a structure in which the tab 12 is located at the bottom may also be possible.

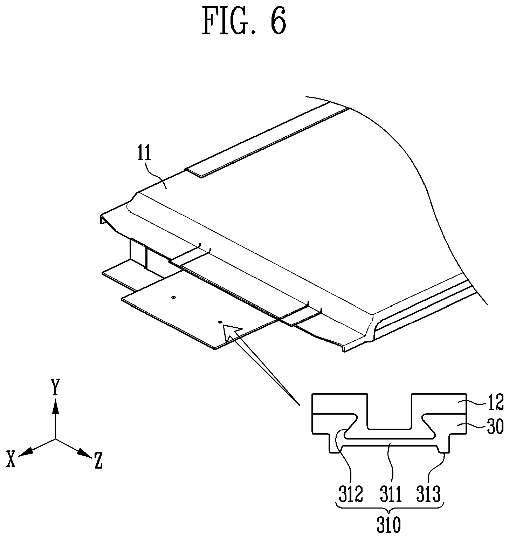

In a detailed view of the cold-joined structure with reference to FIG. 6, a recess 310 may be formed in the first busbar 30 located at the bottom. On an inner side of the recess 310, a low surface 311 and an incline 312 may be formed. The low surface 311 may form the bottom of the recess 310 and may be in contact with the tab 12. The diameter of the recess 310 may increase as going inward. In other words, the diameter of the recess 310 may increase as going inward to form the incline 312.

At least a portion of the tab 12 may be located within the recess 310. Specifically, a first region 120 of the tab 12 may be located within the recess 310. The incline 312 may prevent the tab 12 located within the recess 310 from being removed. This is because the diameter of the opening of the recess 310 is smaller than the diameter of the low surface 311.

The recess 310 may further include a trough 313. The trough 313 may be positioned by protruding from an edge of the low surface 311. The edges of the low surface 311 may be subjected to a greater pressure compared to the center, which may cause the trough 313 to be formed.

In another embodiment, in the case that the tab 12 is positioned at the bottom along the first direction and the first busbar 30 is positioned at the top, a recess 310 will be formed in the tab 12.

After the first busbar 30 and the tab 12 are joined, the tab 12 may be pressed so that the free end of the first busbar 30 is positioned toward the main body 11. In an embodiment, the tab 12 may be bent to cause the position of the free end of the tab 12 to be changed. The tab 12 may be bent twice to cause the free end of the tab 12 to be positioned to face 180 degrees opposite directions.

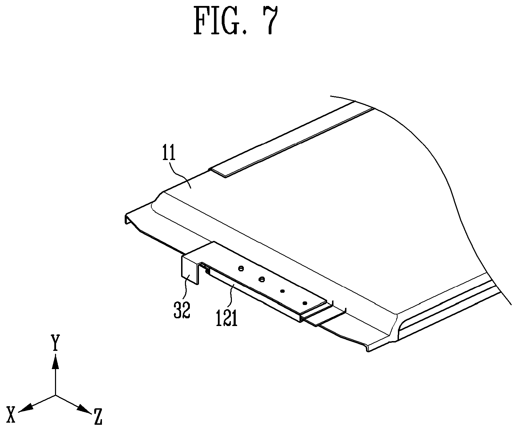

Referring to FIG. 7, the tab 12 may be bent twice to form a "U" shape with the tab 12 lying on its side.

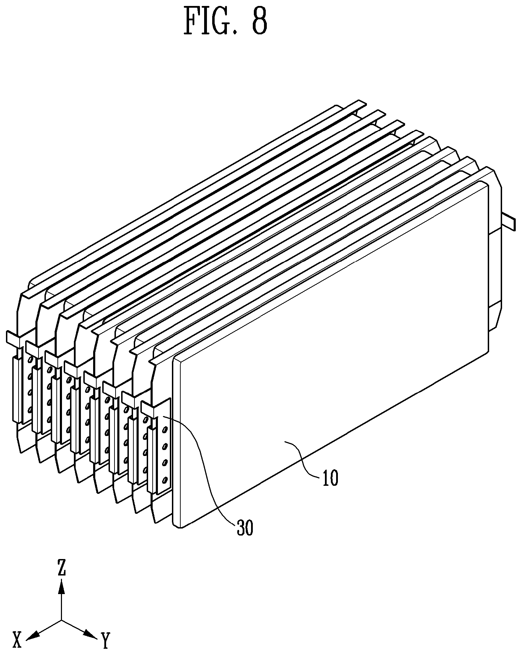

FIGS. 8 to 12 illustrate a joined structure of a first busbar 30 and a second busbar 40 according to an embodiment of the present disclosure.

After the tabs 12 provided on the plurality of battery cells 10 are each joined with the first busbar 30, the plurality of battery cells 10 may be stacked along the first direction. Referring to FIG. 8, the battery cells 10 coupled with the first busbar 30 may be stacked along the first direction.

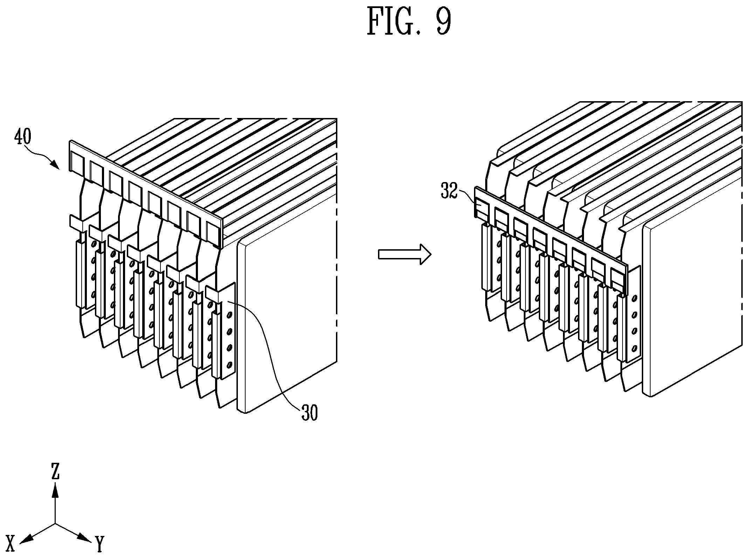

Referring to FIG. 9, the plurality of first busbars 30 may be electrically connected by a second busbar 40. The second busbar 40 may extend along a first direction inside the module case 2. Collectively, the second busbar 40 may be coupled to the first busbar 30 to electrically connect the plurality of battery cells 10 to the outside.

For connection with the first busbar 30, the second busbar 40 may include a connection plate 42 and a slit 43. The second busbar 40 may further include a support body 41 connecting the connection plate 42 and the slit 43.

The support body 41 may extend along the first direction and may have a plurality of connection bodies and a plurality of slits 43 formed on one side. Advantageously, the connection plates 42 may be formed in the support body 41 along a direction perpendicular to the first direction. Furthermore, the plurality of slits 43 may be formed between one connection plate and the other connection plate. This may allow the first busbar 30 to be inserted through the slits 43 and connected with the plurality of connection plate 42.

Referring to FIGS. 9 and 10, the second busbar 40 may be slidably coupled to the first busbar 30. As one side of the slit 43 is open, the first busbar 30 may be inserted into the slit 43. For example, the second busbar 40 may be moved along the third direction to be coupled to the first busbar 30.

Eventually, the first plate 31 is inserted into the slit, and one surface of the second plate and one surface of the connection plate may come in contact.

When the first busbar 30 is inserted, the connection plate 42 and the second plate 32 may be brought into contact. This enables the second busbar 40 and the first busbar 30 to be electrically connected. For a reliable connection, one surface of the connection plate 42 may be provided in a shape to correspond to the second plate 32. For example, when the second plate 32 is rectangular, the connection plate 42 may also be rectangular.

When the first busbar 30 is inserted through the slit 43, the plurality of connection plates 42 may come in contact with the plurality of second plates 32, respectively.

The first busbar 30 and the second busbar 40 may be welded. The first busbar 30 and the second busbar 40 may include the same material. The first busbar 30 and the second busbar 40 may be formed of the same material. This may improve the stability and performance of welding.

Specifically, the first busbar 30 and the second busbar 40 may be welded by brazing. This is to cover the tolerance occurring between the first busbar 30 and the second busbar 40.

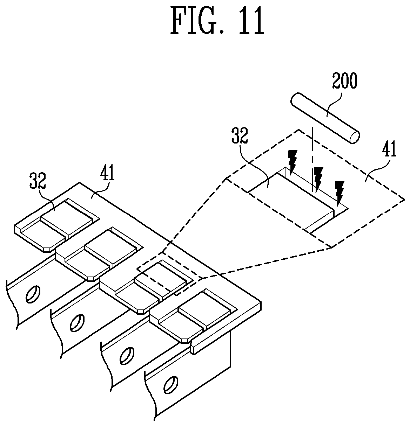

Referring to FIG. 11, even when the first busbar 30 is inserted into the slit 43, a fine tolerance may occur due to the plurality of battery cells 10 being inserted simultaneously. Therefore, any one of the first busbars 30 may be spaced apart from the second busbar 40 by a certain distance, resulting in a tolerance. To cover the tolerance, the first busbar 30 and the second busbar 40 may be connected by brazing welding.

The welding system (not shown) may provide filler metal 200 in the region where the first busbar 30 and the second busbar 40 are in contact with each other. The welding system may allow the second plate 32 and the second busbar 40 to be welded by supplying the filler metal 200 to the region where the second plate 32 and the second busbar 40 face along the third direction. The filler metal 200 may have a lower melting temperature than the first busbar 30 and the second busbar 40. For example, the filler metal may be a welding wire.

The welding system may also provide a heat source. For example, the heat source may be a laser. When the laser is irradiated, the filler metal may first melt and then solidify between the first busbar 30 and the second busbar 40, thereby minimizing damage to the first busbar 30 and the second busbar 40.

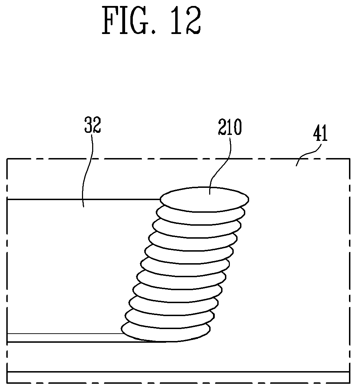

A weld bead 210 may be formed by welding. The weld bead 210 may be formed between the first busbar 30 and the second busbar 40. Specifically, the weld bead 210 may be formed in the region where the second plate 32 and the support body 41 meet. Referring to FIG. 12, the weld bead 210 may extend along a direction from the second plate 32 and the support body 41.

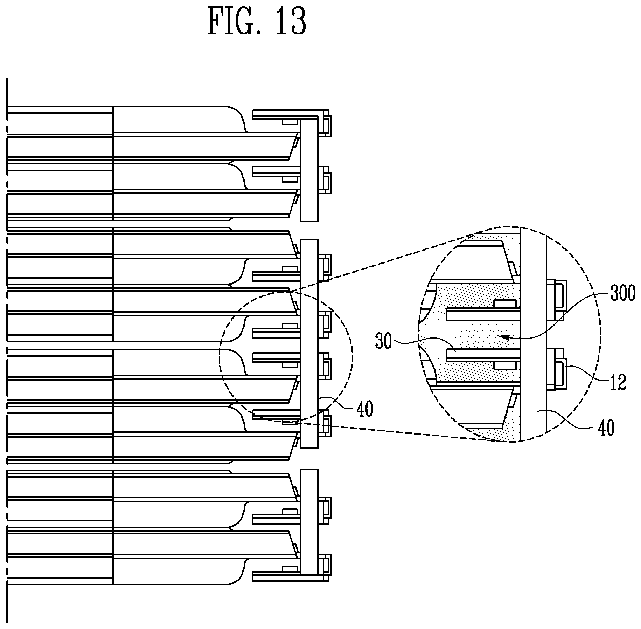

FIG. 13 illustrates an insulator 300 according to an embodiment of the present disclosure.

The battery module 1 of the present disclosure may further include an insulator 300. The insulator 300 may include an insulating material. The insulator 300 may be located inside the module case 2.

The inside of the battery module 1 may have an air layer to form an insulating structure, but the insulator 300 may further improve the insulating performance of the battery module 1. The thermal conductivity of the insulator 300 may be higher than the thermal conductivity of air. For example, the insulator 300 may include urethane or silicone. The insulator 300 may be a silicone liquid type of foaming agent.

Referring to FIG. 13, the insulator 300 may be located in an insulation region provided between the main body 11 and the second busbar 40. This improves the insulation performance of the battery module 1 to prevent fire propagation and prepare for thermal runaway.

Hereinafter, a method for manufacturing a battery module 1 according to the present disclosure will be described in detail.

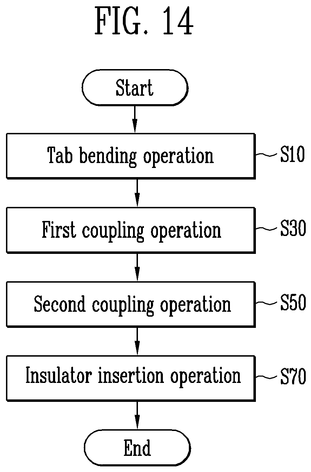

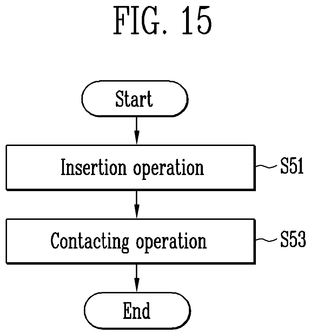

FIGS. 14 and 15 briefly illustrate the sequence of the method for manufacturing a battery module 1 according to an embodiment of the present disclosure.

The method for manufacturing a battery module 1 of the present disclosure includes: a first coupling step S30 for coupling a first busbar 30 of a busbar assembly 20 with any one surface of a tab 12 along a second direction and a first direction which are a protruding direction of the tab 12 and a third direction perpendicular to the second direction; and a second coupling step S50 for connecting the first busbar 30 with a second busbar 40 extending along the second direction of the busbar assembly 20.

Referring to FIG. 14, the first coupling step S30 may be followed by the second coupling step S50. In the first coupling step S30, the tab 12 may be connected to the first busbar 30. In the second coupling step S50, the first busbar 30 may be connected to the second busbar 40. This allows the battery cell 10 to be electrically connected to the outside.

In the first coupling step S30, the first plate 31 of the first busbar 30 may be arranged in parallel with the tab 12, and the first busbar 30 and the first plate 31 may be joined. The first coupling step S30 may be proceeded by cold joining. In particular, clinching joining may be applied in the first coupling step S30.

Referring to FIG. 15, the second coupling step S50 may include an insertion step S51 for inserting the second plate 32 of the first busbar 30 into the open slit 43 on one side of the second busbar 40 and a contacting step S53 for bringing one surface of the second plate 32 of the first busbar 30 with one surface of the connection plate 42 of the second busbar 40. As described above, the second busbar 40 may slide toward the first busbar 30 to be in contact with each other. Specifically, the second busbar 40 may be moved along a third direction such that the first plate 31 is inserted into the slit 43.

In the second coupling step S50, the first busbar 30 and the second busbar 40 may be coupled via brazing welding. In the second coupling step S50, the filler metal is supplied to a region where the second plate 32 and the second busbar 40 face each other along the third direction to weld the second plate 32 and the second busbar. This is to cover the tolerance formed between the first busbar 30 and the second busbar 40 to improve the stability of the bonding and the quality of the welding.

Referring again to FIG. 14, the manufacturing method of the present disclosure may further include a tab bending step S10. In the tab bending step S10, the tab 12 may be bent such that a free end of the tab 12 faces the main body 11. Specifically, in the tab bending step S10, any region of the tab 12 may be bent. For example, in the tab bending step S10, the tab 12 may be bent twice. After the tab bending step S10, the first coupling step S30 may be performed.

The manufacturing method of the present disclosure may further include an insulator insertion step S70. In the insulator insertion step S70, an insulator 300 including an insulating material inside the module case 2 may be inserted. In particular, the insulator 300 including the insulating material may be inserted into the insulation region provided between the main body 11 and the second busbar 40.

The present disclosure may be practiced in various modifications, and the scope of the present disclosure is not limited to the embodiments described above. Therefore, in the case that the modified embodiment includes the components of the present disclosure, it should be considered to fall within the scope of the present disclosure.

## Claims

1. A battery module comprising:
a plurality of battery cells including a main body supplying or storing electrical energy and a tab protruding from one side of the main body, and staked along a predetermined first direction;
a module case accommodating the plurality of battery cells;
a plurality of first busbars coupled to any one of surfaces of the tab formed along a second direction along which the tab protrudes inside the module case and along a third direction perpendicular to the first direction and the second direction, and provided in the same number as that of the tab; and
a second busbar extending along the first direction inside the module case and coupled with at least a portion of the plurality of first busbars to electrically connect the plurality of battery cells with the outside.

2. The battery module according to claim 1, wherein a free end of the tab is positioned to face the main body.

3. The battery module according to claim 2, wherein the tab includes a first region coupled with the first busbar and a second region connecting the first region and the main body, and
wherein at least a portion of the first region and at least a portion of the second region are provided in parallel with each other.

4. The battery module according to claim 3, wherein the tab is formed by bending.

5. The battery module according to claim 3, wherein the first region is integrally connected with the second region.

6. The battery module according to claim 1, wherein the first busbar includes a first plate coupled with the tab; and a second plate coupled with the second busbar and provided perpendicularly on an edge of the first plate, and
wherein the first plate is provided in parallel with the tab to be joined together.

7. The battery module according to claim 6, wherein the second busbar includes: a connection plate in contact with one surface of the second plate; and a slit open to one side, and
wherein the first plate is inserted into the slit, and one surface of the second plate and one surface of the connection plate come in contact.

8. The battery module according to claim 1, wherein the first busbar is connected to the second busbar by brazing welding.

9. The battery module according to claim 1, wherein the first busbar and the second busbar include the same material.

10. The battery module according to claim 1, wherein the module case further includes an insulator including an insulating material inside.

11. A method for manufacturing a battery module which includes: a plurality of battery cells including a main body supplying or storing electrical energy and a tab protruding from one side of the main body and stacked along a predetermined first direction; a busbar assembly electrically connecting the plurality of battery cells; and a module case accommodating the plurality of battery cells, the method comprising:
a first coupling step for coupling a first busbar of the busbar assembly to any one of surfaces of the tab formed along a second direction along which the tab protrudes and a third direction perpendicular to the first direction and the second direction; and
a second coupling step for connecting the first busbar with a second busbar of the busbar assembly extending along the second direction.

12. The method according to claim 11, further comprising a tab bending step for bending the tab such that a free end of the tab faces the main body.

13. The method according to claim 12, wherein, in the tab bending step, the tab is bent twice.

14. The method according to claim 11, wherein, in the first coupling step, a first plate of the first busbar is arranged in parallel with the tab, and the first busbar and the first plate are joined by cold joining.

15. The method according to claim 14, wherein, in the first coupling step, the first busbar is joined with the first plate by a clinching joining.

16. The method according to claim 11, wherein the second coupling step includes:
an insertion step for inserting a second plate of the first busbar into a slit open at one side of the second busbar; and
a contacting step for bringing one surface of the second plate of the first busbar in contact with one surface of the connection plate of the second busbar.

17. The method according to claim 16, wherein, in the insertion step, the second busbar moves along the third direction such that the second plate is inserted into the slit.

18. The method according to claim 16, wherein, in the second coupling step, the first busbar is coupled to the second busbar by brazing welding.

19. The method according to claim 18, wherein, in the second coupling step, a filler metal is supplied to a region where the second plate and the second busbar face each other along the third direction to weld the second plate and the second busbar.

20. The method according to claim 11, further comprising an insulator insertion step for inserting an insulator including an insulating material inside the module case.
